# EUROPEAN PATENT SPECIFICATION

(11) **EP 0 912 355 B1**
(45) Date of publication and mention of the grant of the patent: **05.12.2001**
(21) Application number: 96919242.6
(22) Date of filing: 07.06.1996
(51) Int. Cl.: B60C 11/04, B60C 11/11

(54) **A CONVERTIBLE TREAD FOR A RADIAL TRUCK OR TRAILER TIRE**
EINE UMWANDELBARE LAUFFLÄCHE FÜR LKW-REIFEN ODER ANHÄNGERREIFEN
BANDE DE ROULEMENT CONVERTIBLE POUR PNEU RADIAL DE CAMION OU DE REMORQUE

(43) Date of publication of application: 06.05.1999
(73) Proprietor: THE GOODYEAR TIRE & RUBBER COMPANY, Akron, Ohio 44316-0001 (US)
(72) Inventor: SCHUSTER, Daniel, Edward, North Royalton, OH 44133 (US); SERICH, John, James, Poland, OH 44514 (US)
(74) Representative: Leitz, Paul
(86) International application number: US9609636
(87) International publication number: WO9746400

(56) References cited:
- EP-A- 0 230 765
- GB-A- 2 003 804
- US-A- 4 732 195
- US-A- 4 854 358

## Description

### Technical Field

This invention relates to the field of heavy duty radial pneumatic tires for trucks and truck trailers.

### Background Art

In many areas of the world, heavy duty vehicles such as trucks must have superior traction performance on the drive axle positions of the vehicle. Tires having sufficiently aggressive tread patterns with block element type tread patterns seem to provide the best traction performance.

As the tread becomes about half worn these block elements can lose some of their traction capability or performance. Ideally, the drive axle tires would be replaced at that time Unfortunately, for the vehicle owner this means that the tread still had a useful half life remaining if it could be used in a less traction sensitive wheel position. Unfortunately, the original tread pattern when worn was not conducive to such applications such as trailer tires.

The need was apparent that tread patterns must change or convert when worn partially to a different pattern if they were to be successfully used in other wheel positions.

The use of convertible truck tires which start out having one block type tread pattern and as the tire reached a certain level of wear changed to a rib type tire was taught in U.S. Patent 4,223,712 wherein less than full depth inclined transverse grooves would disappear after the tire was 30% to 70% worn.

A later U.S. Patent 4,732,195 issued March 22, 1988, corresponding to the preamble of claim 1, taught that the transverse grooves should disappear toward the axially outside of the tread so that the separated blocks change into continuous ribs from the axially outside to the inside of the tread in sequence as the tread wears.

U.S. Patent 4,854,384 issued August 8, 1989, taught a block type tread pattern which is also converted to a rib type tire when the tire is worn in the range of 35% to 75% of the maximum depth. The tread has a plurality of circumferentially continuous zigzag and straight grooves which have a total width equal to 15-35% of the entire tread width when the tire is new and 10-25% of the entire tread width when the tire is worn and the transverse grooves completely disappear to from a rib pattern consisting solely of zigzag longitudinal grooves.

In these patents the tread pattern simply was converted from block elements to ribs by the loss of the transverse groove.

These rib type tires generally will exhibit uniform wear and can be used where traction must be achieved by zigzagging the longitudinal grooves. Historically, such tires have relatively poor braking traction when used on wet or snowy roads.

The present invention in a unique way converts a block element tread pattern for drive axles of trucks when the tire is half worn to a combination of shoulder ribs and central rows of larger block elements which can exhibit substantially superior wet traction capability than the prior art ribbed type tires.

### Disclosure of the Invention

A radial ply pneumatic tire 10 for trucks or trailers having a tread 12 with at least three circumferential grooves 20, 22 that extend circumferentially to divide the tread 12 into at least four parts is disclosed, more preferably 5 parts divided by four circumferential grooves 20, 22. The tread 12 has lateral grooves 30, 31, 32, 33, 34 extending across the at least four parts of the tread 12 to form at least four rows 1, 2, 3, 4, 5 of circumferentially separated blocks 40 including two shoulder rows 1, 5 and at least two, preferably three central rows 2, 3, 4. Each block 40 has a radially outward surface 42.

The circumferential grooves 20, 22 have a first width W₁ that narrows to a second width W₂ that is less than 50% of W₁ and the lateral grooves 30, 34 in each shoulder row extend to a depth of less than 60% of the non-skid depth D.

The lateral grooves in the central rows 31, 32, 33 have a first length of L₁ that increase to a second length L₂ that is greater than L₁, preferably to L₁ + 50% of W₁ in length. The first groove width W₃ of the lateral grooves 31, 32, 33 in the central rows preferably narrows to a second width W₄ that occurs at a groove depth of less than 60% of the non-skid depth D. The second width W₄ preferably is about 80% or less of the first width W₃ and preferably less than 50% of W₃.

These changes in groove widths of the circumferential grooves 20, 22 and the central row lateral grooves 31, 32, 33 to less than 50% W₁ and less than 80% W₃ respectively preferably occurs at the same depth. Furthermore, it is preferred that the lateral grooves 30, 34 in the shoulder rows 1, 5 cease at the same depth wherein the circumferential and the lateral grooves narrow.

It is further believed important that the circumferential and lateral grooves change average width at 40% or more of the non-skid depth D of the tread 12.

In the preferred embodiment each tire block element has at least one sipe 51, 52, 53 and a portion of the sipe 51, 52, 53 remains in the tread 12 after the width of the circumferential 20, 22 and lateral grooves 31, 32, 33 narrows due to the tire 10 being worn.

The tire 10 when new preferably has a net-to-gross ration of less than 70% which increases by at least 10% at the depth of the tread where the average groove widths narrow, preferably increasing by almost 20%.

### Definitions

"Aspect ratio" of the tire means the ratio of its section height (SH) to its section width (SW) multiplied by 100% for expression as a percentage.

"Asymmetric tread" means a tread that has a tread pattern not symmetrical about the centerplane or equatorial plane EP of the tire.

"Axial" and "axially" means lines or directions that are parallel to the axis of rotation of the tire.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact of the tire with a flat surface at zero speed and under normal load and pressure.

"Groove" means an elongated void area in a tread that may extend circumferentially or laterally about the tread in a straight, curved, or zigzag manner. Circumferentially and laterally extending grooves sometimes have common portions. The "grooved width" is equal to the tread surface area occupied by a groove or groove portion, the width of which is in question, divided by the length of such groove or groove portion; thus, the groove width is its average width over its length. Grooves may be of varying depths in a tire. It should be noted that throughout this disclosure groove depth is measured from the tread surface extending radially inwardly. The depth of a groove may vary around the circumference of the tread, or the depth of one groove may he constant but vary from the depth of another groove in the tire. If such narrow or wide grooves are of substantially reduced depth as compared to wide circumferential grooves which they interconnect, they are regarded as forming "tie bars" tending to maintain a rib-like character in the tread region involved.

"Inboard side" means the side of the tire nearest the vehicle when the tire is mounted on a wheel and the wheel is mounted on the vehicle.

"Lateral" means an axial direction.

"Net contact area" means the total area of ground contacting elements between defined boundary edges divided by the gross area between the boundary edges as measured around the entire circumference of the tread.

"Net-to-gross ratio" means the total area of ground contacting tread elements between the lateral edges around the entire circumference of the tread divided by the gross area of the entire tread between the lateral edges.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.

"Non-skid depth" means the full depth or total depth of the tread from the surface of the tread to the bottom of the deepest groove.

"Outboard side" means the side of the tire farthest away from the vehicle when the tire is mounted on a wheel and the wheel is mounted on the vehicle.

"Radial" and "radially" means directions radially toward or away from the axis of the rotation of the tire.

"Rib" means a circumferentially extending strip of rubber on the tread which is defined by at least one circumferential groove and either a second such groove or a lateral edge, the strip being laterally undivided by full-depth grooves.

"Sipe" means small slots molded into the tread elements of the tire that subdivide the tread surface and improve traction.

"Tread element" or "traction element" means a rib or a block element.

### Brief Description of Drawings

Fig. 1 is a developed fragmentary plan view of a preferred embodiment tire having a block type tread pattern according to the invention.
Fig. 2 is a plan view of the tire of Fig. 1 after tread wear has caused the conversion of the tread pattern to the two shoulder ribs with central rows of enlarged blocks.
Figs. 3-7 are cross-sectional views taken of the various circumferential and lateral grooves.

### Detailed Description of the Invention

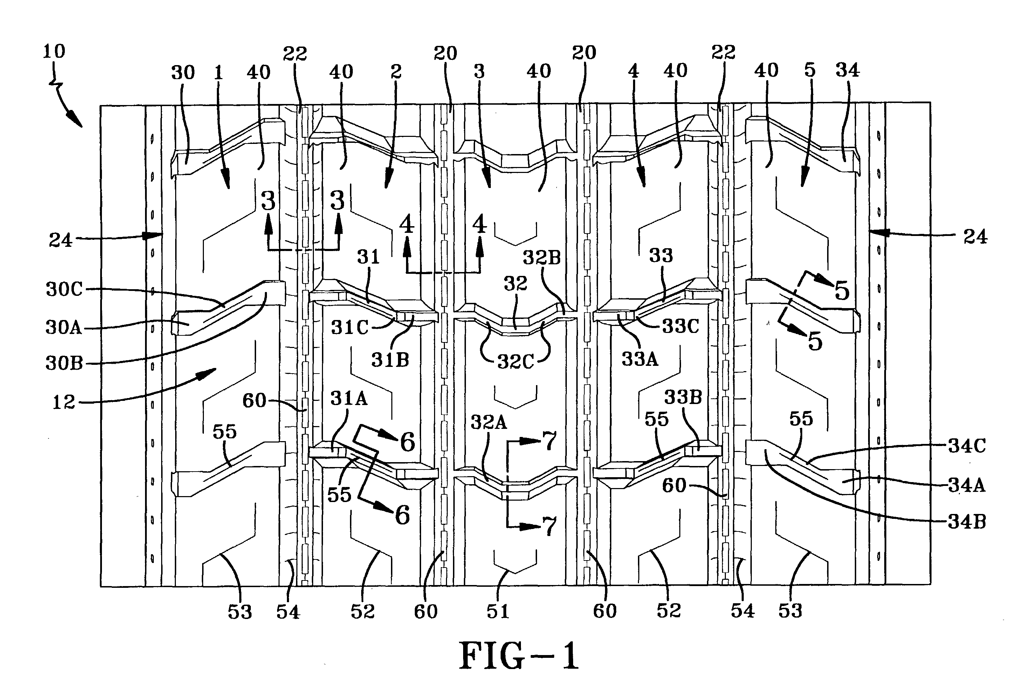

With reference to Fig. 1 there is shown a fragmentary plan view of the preferred embodiment tire 10. The tire 10 has a tread 12 having at least three circumferential grooves 20, 22 dividing the tread into at least four parts. As illustrated, the tread 12 of the preferred tire has four such circumferential grooves 20, 22 dividing the tread into five parts. The tread 12 has a plurality of lateral grooves 30, 31, 32, 33, 34 extending across each part and dividing the parts forming at least four, as illustrated five rows 1, 2, 3, 4, 5 of circumferentially separated blocks 40.

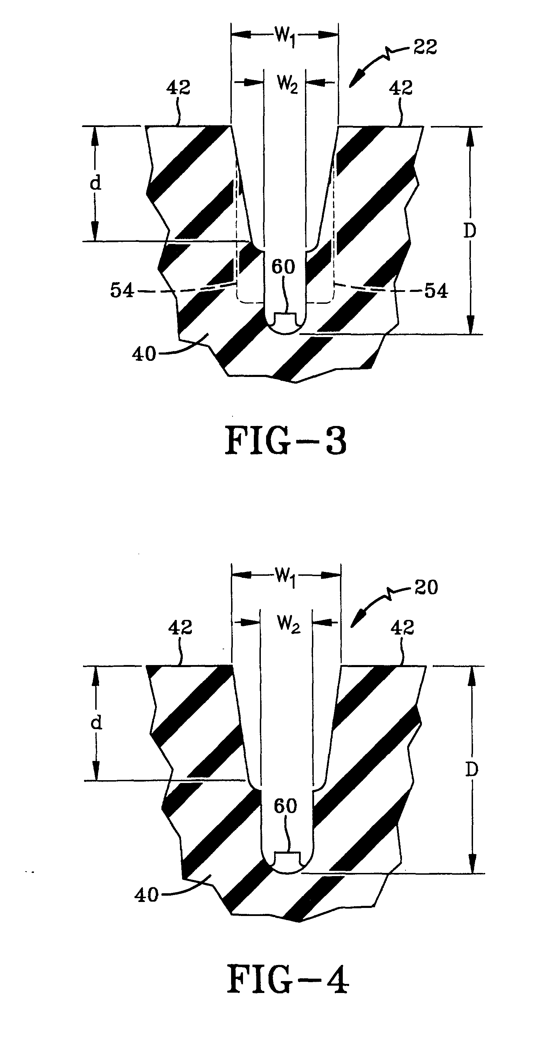

Each block 40 has at least one sipe 51, 52, 53. Several of the lateral grooves 30, 31, 32, 33 and 34 have a sipe 55. As shown in Fig. 3, numerous short lateral sipes 54 are closely spaced and positioned on a radially inner portion of the block elements 40 adjacent shoulder grooves 22.

A plurality of stone penetration protectors 60 are shown extending from the base of the circumferential grooves 20, 22. These features help protect the tire from having small stones or rocks from penetrating through the base of the grooves 20, 22, and thus exposing the underlying reinforcing belt structure.

As illustrated, the circumferential grooves 20, 22 are straight and as shown in cross-sectional views of Figs. 3 and 4 extend to the non-skid depth D (excluding tread wear indicators and the stone penetration protectors 60).

Each groove 20, 22 has a first groove width W₁ before the tread 12 is worn as shown in Fig. 1. Thereafter, the width of the grooves 20, 22 substantially narrows to a second width W₂ that is less than 50% of W₁ as shown about 30% of W₁. It should be noted that the second width W₂ may occur at a groove depth that is less than 60% of the non-skid depth D as shown.

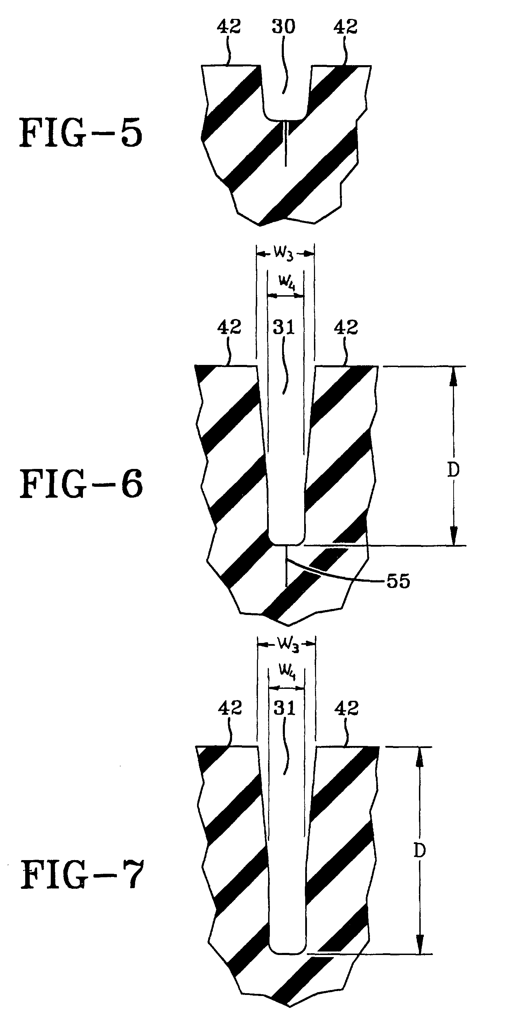

With reference to the cross-sectional views of Figs. 5-7, the cross-sectional shapes of the various lateral grooves 30, 31, 32, 33, 34 are shown. In each case, the lateral groove has a first width W₃ before the tread 12 is worn. Thereafter, the width of the grooves 31, 32, 33, narrow to a second width W₄ that may occur at a groove depth that is less than 60% of the non-skid depth D and preferably to a depth of at least 40% of D. Preferably the second width W₄ is about 80% of the first width W₁.

In the shoulder rows 1 and 5 the lateral grooves stop at the groove depth of less than 60% of the non-skid depth D. Preferably these grooves extend radially inward from the tread surface at least 40% of D. Beyond that depth the groove ceases and the shoulder rows become solid shoulder ribs.

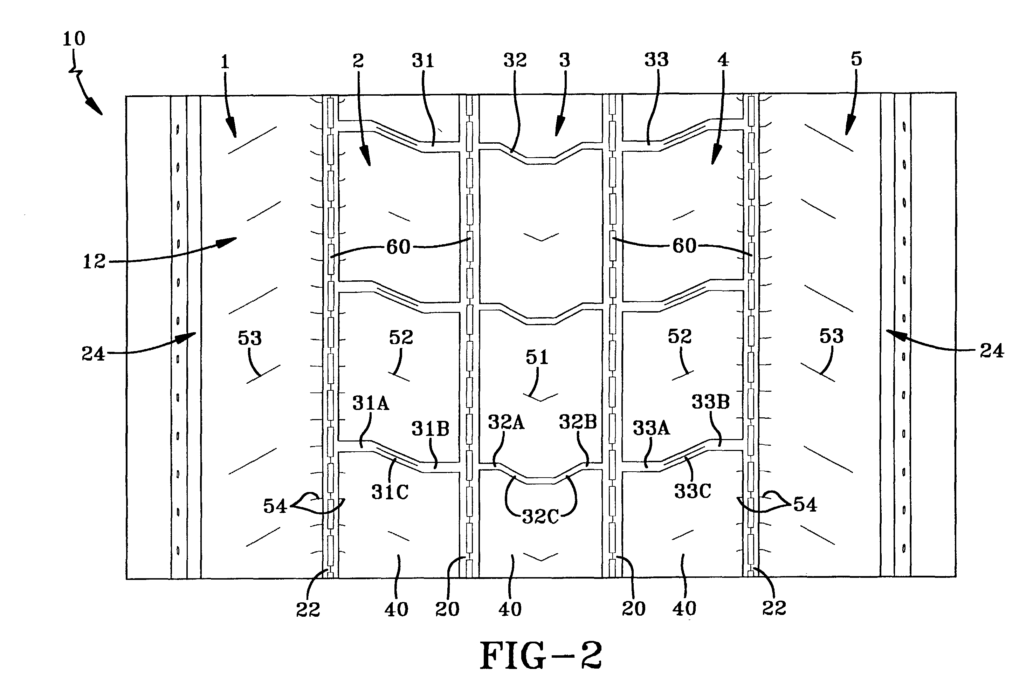

By measuring along the radially outer surface 42 of each block 40 adjacent to a particular lateral groove, one can determine the average length of the lateral groove. Each groove 31, 32, 33 has a first length L₁ before the tread is worn. As the tread 12 wears to a location wherein the circumferential grooves 20, 22 narrow, the lateral grooves in the central rows 2, 3 and 4 actually increase in length. As shown in Fig. 2, the groove length increases from the first length L₁ to the second length L₂ where L₂ = L₁ + greater than or equal to 50% of W1. As shown each lateral groove 31, 32, 33 increased by an amount equal to about 2/3 of W₁ in the central rows.

Further inspection of Fig. 2 shows that the net-to-gross ratio of the preferred tire increased to about 85% from the original or new tire net-to-gross ratio of about 68%. It is believed that the new tire net-to-gross ratio should be at or below 70% and after wearing down the tread depth to between 40% and 60% of D. The narrowing or elimination of the grooves should result in at least a 10%, preferably 15% or more, increase in the net-to-gross contact ratio.

This increase in tread rubber in contact with the road surface greatly retards the rate of tread wear. The fact that the lateral grooves 31, 32, 33 in the central rows are effectively much longer means that the tractive efficiency is also maintained at a higher rate than the early mentioned prior art rib type tires. Furthermore, the wet traction performance of the inventive tire is enhanced by the combination of the long lateral grooves and the straight circumferential grooves. The use of straight circumferential grooves 20, 22 along with a plurality of blocks having lengthened lateral grooves markedly increases the tractive performance of the partially worn tire. The generous use of lower level sipes 54, and 55 along with maintaining portions of sipes 51, 52, 53 also positively contribute to traction performance.

The sipes 54 are shown in dashed lines of cross-sectional view in Fig. 3. The sipes originate in the area of the groove walls adjacent the circumferential grooves 22. The sipes are at or slightly below the intersection of the groove wall and the radially outer surface 42 of the block element 40 and extend radially inwardly to a location at, or slightly above, the base of the groove, preferably above the base ot the groove or above the stone penetration protectors 60. As the tread 12 wears these sipes 54, which are originally partially hidden in the grooves 22, are exposed. When the tread reaches the transition point of wear, the sipes 54 are then fully laterally exposed and they become functionally important. At that level of tread wear the tire tread is converted to a pattern useful on free rolling axles of vehicles such as trailers. These sipes 54 help in retarding the initiation of riverwear that is a common occurrence in the blocks or ribs of such tires in the location designated in rows 2 and 4 at the axially outer portions adjacent grooves 22.

Although the block elements 40 of Fig. 1 and Fig. 2 are shown almost aligned in a circumferential direction, it is believed that it may be desirable to stagger the rows 1, 2, 3, 4, 5 so that the axially adjacent blocks are more circumferentially offset.

Another important feature of this invention is the groove 24 shown in Fig. 1. As the tread wears this narrow straight circumferential groove which is initially not readily observable becomes observable. This observability occurs when the drive axle tread pattern is fully worn, that is as shown in Fig. 2 at the 40% to 60% worn condition earlier discussed. At that level of wear the trailer pattern is fully exposed as well as this narrow groove 24. This narrow groove functions as a pressure distribution groove which helps reduce or eliminate the occurrence of chamfer wear common in the free rolling axle position of tires used on truck trailers.

Another important feature is that each of the lateral grooves have their first and second ends 30A, 30B, 31A, 31B, 32A, 32B, 33A, 33B, 34A, 34B oriented perpendicular to the circumfercntial direction and have one or more straight inclined portions oriented about 45° or more relative to the circumferential direction. This configuration insures that a large portion of the lateral grooves are perpendicularly oriented to the direction of forward travel. This greatly improves wet and dry braking traction.

As can be appreciated from the above-description, this tire according to the invention does not compromise the traction performance of the shoulder ribs and central block type pattern in the 60% worn condition. Great attention has been given to enhancing both the traction and the wear properties of the worn tread. The conversion of one aggressive drive axle type tread to a trailer type tread having an aggressive combination of shoulder ribs and enlarged central row blocks makes the tire according to the present invention superior to those of the prior art.

## Claims

1. A radial ply pneumatic tire (10) for trucks and trailers having a tread (12) with a non-skid depth D, at least three circumferential grooves (20, 22) extending circumferentially to divide the tread into at least four parts, lateral grooves (30, 31, 33, 34) extending across the at least four parts of the tread to form at least four rows (1, 2, 4, 5) of circumferentially separated blocks (40) including two shoulder rows (1, 5) and at least two central rows (2, 4), each block having a radially outer surface (42), the tire **characterized by:**
the circumferential grooves (20, 22) having a first groove width W₁ that extends to a second groove width W₂ at a groove depth that is less than 60% of the non-skid depth D, the second groove width W₂ being less than 50% of W₁, the lateral grooves (30, 34) in each shoulder row (1, 5) having a first groove width W₃ that extends to a groove depth that is less than 60% of the non-skid depth D, the lateral grooves (31, 33) in the central rows (2, 4) having a first length L₁ that extends to a second length L₂ at a groove depth that is less than 60% of the non-skid depth D, the second length L₂ being greater than the first length L₁.

2. The radial ply pneumatic tire (10) for trucks and trailers of claim 1 wherein the lateral grooves (31, 33) in the central rows (2, 4) have a second groove width W₄ at a groove depth that is less than 60% of the non-skid depth D, W₄ being less than 80% of W₃ for the remainder of the groove depth.

3. The radial ply pneumatic tire (10) for trucks and trailers of claim 2 wherein said second groove width W₂ of said circumferental grooves (20, 22) and said second groove width W₄ of said lateral grooves (31, 33) in the central rows (2, 4) occur at the same groove depth.

4. The radial ply pneumatic tire (10) for trucks and trailers of claim 3 wherein the lateral grooves (30, 34) in the shoulder rows (1, 5) cease at the same groove depth that the second groove widths W₂ and W₄ occur.

5. The radial ply pneumatic tire (10) for trucks and trailers of claim 2 wherein the second groove widths W₂ and W₄ occur at a groove depth that is 40% or more of the non-skid depth D.

6. The radial ply pneumatic tire (10) for trucks and trailers of claim 2 wherein the tire has an initial net-to-gross ratio of less than 70% which increases by at least 10% at the groove depth that the second groove widths W₂ and W₄ occur.

7. The radial ply pneumatic tire (10) for trucks and trailers of claim 1 wherein the second length L₂ equals the first length L₁ + at least 50% of W₁.

8. The radial ply pneumatic tire (10) for trucks and trailers of claim 1 wherein each block element (40) has at least one sipe (55), a portion of the sipe (55) remains in the tread (12) after the width of the circumferential grooves (20, 22) and lateral grooves (30, 31, 33, 40) narrows due to the tire being worn.

9. The radial ply pneumatic tire (10) for trucks and trailers of claim 1 where the central rows lateral grooves (31, 33) in the 60% of more worn condition are oriented generally perpendicular to the direction of travel over about half of their length.

10. The radial ply pneumatic tire (10) for trucks and trailers of claim 1 wherein the circumferential grooves (22) axially inward and adjacent to the shoulder rows (1, 5) have groove walls having numerous lateral extending sipes (55) that appear as the tread (12) wears.

11. The radial ply pneumatic tire (10) for trucks and trailers of claim 1 wherein at a location axially outward of the shoulder row (1, 5) of blocks (40) and radially inward thereof lies a narrow circumferentially straight groove (24) that appears as the tread (12) wears.

## Patentansprüche

1. Radialluftreifen (10) für LKW und Anhänger, der einen Laufstreifen (12) mit einer Gleitschutztiefe D, mindestens drei Umfangsrillen (20, 22), die sich in Umfangsrichtung erstrecken, um den Laufstreifen in mindestens vier Teile zu unterteilen, und Querrillen (30, 31, 33, 34) aufweist, die sich quer durch die mindestens vier Teile des Laufstreifens hindurch erstrecken, um mindestens vier Reihen (1, 2, 4, 5) von in Umfangsrichtung getrennten Blöcken (40) zu bilden, die zwei Schulterreihen (1, 5) und mindestens zwei zentrale Reihen (2, 4) umfassen, wobei jeder Block eine radial äußere Oberfläche (42) aufweist, wobei der Reifen **dadurch gekennzeichnet ist, daß**:
die Umfangsrillen (20, 22) eine erste Rillenbreite W₁ aufweisen, die sich bis zu einer zweiten Rillenbreite W₂ in einer Rillentiefe erstreckt, die weniger als 60 % der Gleitschutztiefe D beträgt, wobei die zweite Rillenbreite W₂ weniger als 50 % von W₁ beträgt, wobei die Querrillen (30, 34) in jeder Schulterreihe (1, 5) eine erste Rillenbreiten W₃ aufweisen, die sich bis zu einer Rillentiefe erstreckt, die weniger als 60 % der Gleitschutztiefe D beträgt, wobei die Querrillen (31, 33) in den zentralen Reihen (2, 4) eine erste Länge L₁ aufweisen, die sich bis zu einer zweiten Länge L₂ in einer Rillentiefe erstreckt, die weniger als 60 % der Gleitschutztiefe D beträgt, wobei die zweite Länge L₂ größer als die erste Länge L₁ ist.

2. Radialluftreifen (10) für LKW und Anhänger nach Anspruch 1, wobei die Querrillen (31, 33) in den zentralen Reihen (2, 4) eine zweite Rillenbreite W₄ in einer Rillentiefe aufweisen, die weniger als 60 % der Gleitschutztiefe D beträgt, wobei W₄ weniger als 80 % von W₃ für den Rest der Rillentiefe beträgt.

3. Radialluftreifen (10) für LKW und Anhänger nach Anspruch 2, wobei die zweite Rillenbreite W₂ der Umfangsrillen (20, 22) und die zweite Rillenbreite W₄ der Querrillen (31, 33) in den zentralen Reihen (2, 4) in der gleichen Rillentiefe auftreten.

4. Radialluftreifen (10) für LKW und Anhänger nach Anspruch 3, wobei die Querrillen (30, 34) in den Schulterreihen (1, 5) in der gleichen Rillentiefe aufhören, in der die zweiten Rillenbreiten W₂ und W₄ auftreten.

5. Radialluftreifen (10) für LKW und Anhänger nach Anspruch 2, wobei die zweiten Rillenbreiten W₂ und W₄ in einer Rillentiefe auftreten, die 40 % oder mehr der Gleitschutztiefe D beträgt.

6. Radialluftreifen (10) für LKW und Anhänger nach Anspruch 2, wobei der Reifen ein anfängliches Netto/Brutto-Verhältnis von weniger als 70 % aufweist, das um mindestens 10 % in der Rillentiefe zunimmt, in der die zweiten Rillenbreiten W₂ und W₄ auftreten.

7. Radialluftreifen (10) für LKW und Anhänger nach Anspruch 1, wobei die zweite Länge L₂ gleich der erste Länge L₁ + mindestens 50 % von W₁ beträgt.

8. Radialluftreifen (10) für LKW und Anhänger nach Anspruch 1, wobei jedes Blockelement (40) mindestens einen Einschnitt (55) aufweist, wobei ein Teil des Einschnitts (55) in dem Laufstreifen (12) verbleibt, nachdem sich die Breite der Umfangsrillen (20, 22) und Querrillen (30, 31, 33, 40) aufgrund dessen verengt hat, daß der Reifen verschlissen ist.

9. Radialluftreifen (10) für LKW und Anhänger nach Anspruch 1, wobei die Querrillen der zentralen Reihen (31, 33) im Zustand von 60 % oder mehr Verschleiß über ungefähr die Hälfte ihrer Länge im allgemeinen rechtwinklig zur Laufrichtung orientiert sind.

10. Radialluftreifen (10) für LKW und Anhänger nach Anspruch 1, wobei die Umfangsrillen (22) axial innen von und benachbart zu den Schulterreihen (1, 5) Rillenwände aufweisen, die zahlreiche, sich quer erstreckende Einschnitte (55) aufweisen, die erscheinen, wenn der Laufstreifen (12) verschleißt.

11. Radialluftreifen (10) für LKW und Anhänger nach Anspruch 1, wobei sich an einer Stelle axial außen in bezug auf die Schulterreihe (1, 5) aus Blöcken (40) und radial innen von diesen eine schmale, sich in Umfangsrichtung erstreckende, gerade Rille (24) befindet, die erscheint, wenn der Laufstreifen (12) verschleißt.

## Revendications

1. Bandage pneumatique à nappe radiale (10) pour des camions et des remorques, possédant une bande de roulement (12) comprenant une profondeur de sculpture D, au moins trois rainures circonférentielles (20, 22) s'étendant en direction circonférentielle pour subdiviser la bande de roulement en au moins quatre parties, des rainures latérales (30, 31, 33, 34) s'étendant à travers lesdites parties de la bande de roulement, au moins au nombre de quatre, pour former au moins quatre rangées (1, 2, 4, 5) de pavés (40) séparés en direction circonférentielle englobant deux rangées d'épaulements (1, 5) et au moins deux rangées centrales (2, 4), chaque pavé possédant une surface externe (42) en direction radiale, le bandage pneumatique étant **caractérisé par le fait que** :
les rainures circonférentielles (20, 22) possèdent une première largeur de rainure W₁ qui s'étend jusqu'à une deuxième largeur de rainure W₂ à une profondeur de rainure qui représente moins de 60 % de la profondeur de sculpture D, la deuxième largeur de rainure W₂ représentant moins de 50 % de W₁; les rainures latérales (30, 34) dans chaque rangée d'épaulement (1, 5) possèdent une première largeur de rainure W₃ qui s'étend jusqu'à une profondeur de rainure qui représente moins de 60 % de la profondeur de sculpture D, les rainures latérales (31, 33) dans les rangées centrales (2, 4) possèdent une première longueur L₁ qui s'étend jusqu'à une deuxième longueur L₂ à une profondeur de rainure qui représente moins de 60 % de la profondeur de sculpture D, la deuxième longueur L₂ étant supérieure à la première longueur L₁.

2. Bandage pneumatique à nappe radiale (10) pour des camions et des remorques selon la revendication 1, dans lequel les rainures latérales (31, 33) dans les rangées centrales (24) possèdent une deuxième largeur de rainure W₄ à une profondeur de rainure qui représente moins de 60 % de la profondeur de sculpture D, W₄ représentant moins de 80 % de W₃ pour le reste de la profondeur de rainure.

3. Bandage pneumatique à nappe radiale (10) pour des camions et des remorques selon la revendication 1, dans lequel ladite deuxième largeur de rainure W₂ desdites rainures circonférentielles (20, 22) et ladite deuxième largeur de rainure W₄ desdites rainures latérales (31, 33) dans les rangées centrales (2, 4) apparaissent à la même profondeur de rainure.

4. Bandage pneumatique à nappe radiale (10) pour des camions et des remorques selon la revendication 3, dans lequel les rainures latérales (30, 34) dans les rangées d'épaulements (1, 5) s'arrêtent à la même profondeur de rainure que celle à laquelle apparaissent les deuxièmes largeurs de rainures W₂ et W₄.

5. Bandage pneumatique à nappe radiale (10) pour des camions et des remorques selon la revendication 2, dans lequel les deuxièmes largeurs de rainures W₂ et W₄ apparaissent à une profondeur de rainure qui représente 40 % ou plus de la profondeur de sculpture D.

6. Bandage pneumatique à nappe radiale (10) pour des camions et des remorques selon la revendication 2, dans lequel le bandage pneumatique possède un rapport net brut initial inférieur à 70 %, qui augmente d'au moins plus 10 % à la profondeur de rainure à laquelle apparaissent les deuxièmes largeurs de rainures W₂ et W₄.

7. Bandage pneumatique à nappe radiale (10) pour des camions et des remorques selon la revendication 1, dans lequel la deuxième longueur L₂ est égale à la première longueur L₁ + au moins 50 % de W₁.

8. Bandage pneumatique à nappe radiale (10) pour des camions et des remorques selon la revendication 1, dans lequel chaque élément en forme de pavé (40) possède au moins une lamelle (55), une portion de la lamelle (55) subsistant dans la bande de roulement après le rétrécissement de la largeur des rainures circonférentielles (20, 22) et des rainures latérales (30, 31, 33, 40) à cause de l'usure du bandage pneumatique.

9. Bandage pneumatique à nappe radiale (10) pour des camions et des remorques selon la revendication 1, dans lequel les rainures latérales (31, 33) des rangées centrales, à l'état usé à raison de 60 % ou plus, sont orientées généralement perpendiculairement à la direction de déplacement sur environ la moitié de leur longueur.

10. Bandage pneumatique à nappe radiale (10) pour des camions et des remorques selon la revendication 2, dans lequel les rainures circonférentielles (22), à l'intérieur des rangées d'épaulements (1, 5) en direction axiale et en position adjacente à ces dernières, possèdent des parois de rainures comportant de nombreuses lamelles (55) s'étendant en direction latérale qui apparaissent lorsque la bande de roulement (12) s'use.

11. Bandage pneumatique à nappe radiale (10) pour des camions et des remorques selon la revendication 1, dans lequel, à un endroit situé à l'extérieur de la rangée d'épaulement (1, 5) de pavés (40) en direction axiale et à l'intérieur de cette rangée en direction radiale, est disposée une rainure rectiligne et étroite (24) s'étendant en direction circonférentielle qui apparaît lorsque la bande de roulement (12) s'use.
